Europäisches Patentamt

(19) European Patent Office  (11) Numéro de publication: **0 051 506**
**B1**
Office européen des brevets

(12) **FASCICULE DE BREVET EUROPEEN**

(45) Date de publication du fascicule du brevet:  (51) Int. Cl.³: **F 16 F  9/50,** B 64 C  25/58
**27.06.84**

(21) Numéro de dépôt: **81401563.2**

(22) Date de dépôt: **09.10.81**

(54) **Amortisseur-vérin.**

(30) Priorité: **30.10.80  FR 8023190**

(43) Date de publication de la demande:
**12.05.82 Bulletin 82/19**

(45) Mention de la délivrance du brevet:
**27.06.84 Bulletin 84/26**

(84) Etats contractants désignés:
**DE GB IT NL**

(56) Documents cités:
**EP - A - 0 014 660**
**FR - A - 1 586 576**
**FR - A - 2 340 482**
**FR - A - 2 370 196**
**US - A - 2 313 242**

(73) Titulaire: **MESSIER-HISPANO-BUGATTI (S.A), 5, rue**
**Louis Lejeune, F-92120 Montrouge (FR)**

(72) Inventeur: **Turiot, André, 77 Ave de l'Escadrille**
**Normandie Niemen, F-91390 Morsang S/Orge (FR)**

(74) Mandataire: **Flavenot, Bernard, Société S.E.D.I.C. 40 rue**
**Victor Basch, F-92120 Montrouge (FR)**

## Description

La présente invention concerne les amortisseurs et plus particulièrement ceux qui permettent d'assurer la fonction vérin, notamment du type de ceux équipant les trains d'aérodynes, en particulier d'hélicoptères, et adaptés aux atterrissages en catastrophe, c'est-à-dire à une vitesse supérieure à celle qui est normalement prévue. On connait déjà de nombreux types d'amortisseurs de suspension pour trains d'atterrissage d'aérodynes, comprenant une tige d'amortisseur montée coulissante avec étanchéité à l'intérieur d'une première chambre de fluide hydraulique d'un cylindre, la tige ou le cylindre renfermant une chambre de rappel élastique à basse pression, telle qu'une chambre de gaz sous pression, ainsi qu'un volume de fluide hydraulique, éventuellement adjacent à la chambre à basse pression, et en communication avec la première chambre du cylindre par au moins un orifice de laminage en compression, présenté, par exemple, par un piston porté par l'extrémité de la tige d'amortisseur reçue à l'intérieur du cylindre, la détente de la chambre à basse pression étant freinée par un clapet de laminage de détente.

Dans ces dispositifs, la chambre à basse pression fait office de ressort, rappelant le dispositif en position d'équilibre après amortissement du déplacement de la tige dans le cylindre, qui résulte d'une dissipation d'énergie par laminage du fluide hydraulique au travers d'orifices calibrés pour les vitesses normales d'atterrissage, de l'ordre de 3 m/s, permettant d'absorber l'énergie à l'impact.

Certains de ces dispositifs connus comprennent également des clapets munis d'orifices de laminage à section variable selon la vitesse d'enfoncement ou le sens de passage du fluide, ainsi que des moyens de freinage en fin de détente de l'amortisseur, afin de rendre ce dernier efficace lors du roulement de l'aérodyne sur sols non préparés ou sur pistes dallées, ou d'absorber certaines pointes d'effort, afin d'absorber les effets du phénomène de résonnance au sol qui se manifeste sur les hélicoptères, à la limite de la sustentation, juste avant le décollage, et afin de ne pas laisser le dispositif se détendre brusquement, avec un choc lorsqu'il arrive en butée en position détendue.

Mais ces dispositifs connus s'avèrent ne pas être adaptés aux atterrissages en catastrophe ou au crash de l'aérodyne, avec des vitesses verticales par exemple de l'ordre de 10 à 12 m/s, pour lesquelles les orifices de laminage en compression apparaissent sous-dimensionnés, de sorte que l'amortisseur se comporte comme un élément quasirigide, transmettant à la structure de l'aérodyne la totalité des efforts qu'il reçoit, ce qui provoque la destruction de l'aérodyne, ou la destruction de l'amortisseur entraînant ensuite celle de l'aérodyne.

Il est également connu un amortisseur de ce type dans lequel l'orifice de laminage est déterminé par un piston traversé, avec un jeu défini, par une tige portée par un fond rigide, monté à l'intérieur de la tige, et lui-même percé d'orifices de freinage assurant le laminage du fluide hydraulique passant d'une chambre interne à la tige vers une chambre interne au fond rigide et séparée d'une chambre de gaz à haute pression par un piston séparateur.

A l'impact, dans ce dispositif, et dans les dispositifs analogues à fond mobile percé d'orifices de laminage, on superpose aux efforts dus à l'inertie des parties non suspendues, telles que la roue et ses équipements (freins notamment), des efforts dus au laminage, qui sont d'autant plus importants que la vitesse verticale à l'impact est élevée, de sorte que l'effort total subi par l'amortisseur est très supérieur à sa charge limite élastique et peut dépasser sa charge de rupture ou la charge de rupture de l'atterrisseur, et entraîner la destruction de l'aérodyne. On connait par ailleurs, des amortisseurs-vérins susceptibles d'amener les atterrisseurs indifféremment en position rentrée, lors du vol de l'aérocyne, en position sortie pour l'atterrissage et le roulage ainsi qu'en position surbaissée au sol, pour faciliter la logeabilité de l'aérodyne dans un hangar, l'accessibilité à certaines parties de l'aérodyne, son ancrage sur son air de stationnement, etc. Ces amortisseurs-vérins comprennent par exemple un amortisseur, pouvant être du type présenté ci-dessus, et monté en bout d'une tige de vérin, dont une première chambre fait office de cylindre pour l'amortisseur, et elle-même solidaire d'un piston de vérin monté coulissant dans un cylindre de vérin, avec lequel le piston définit une chambre commandant la descente du train d'atterrissage lorsqu'elle est alimentée en fluide hydraulique, et commandant la mise en position surbaissée, lorsqu'elle est vidée, sans modification de la charge de l'amortisseur. De plus, un piston de relevage, monté coulissant dans une seconde chambre de la tige du vérin, séparée de la première, et constituant une chambre de relevage de l'atterrisseur, permet de charger l'amortisseur en tirant la tige de ce dernier vers l'intérieur de la tige du vérin, lorsque cette seconde chambre est alimentée en fluide hydraulique et que la chambre de descente est vidée, ce qui amène l'atterrisseur en position rentrée. Un dispositif de verrouillage mécanique, par exemple à griffes, ou hydraulique, comprenant un clapet de verrouillage hydraulique à ouverture commandée, est, en outre, prévu pour verrouiller la tige de vérin en position sortie par rapport au cylindre de vérin, après remplissage de la chambre de descente. Dans le cas d'un dispositif hydraulique, un clapet de surpression disposé en bas de la chambre de descente autorise une prolongation de la course par vidange de la chambre de descente en cas de crash.

Mais, cette solution présente l'inconvénient que la course possible de l'amortisseur n'est pas utilisée au mieux pour absorber une part supplémentaire de l'énergie de crash.

Le problème que l'on vise à résoudre par la présente invention consiste à concevoir des amortisseurs et amortisseurs-vérins perfectionnés, capables d'absorber une fraction de l'énergie de crash pouvant être de trois à quatre fois supérieure à l'énergie maximum normale, absorbée pour des vitesses normales d'atterrissage, cette fraction de l'énergie de crash étant elle-même absorbée à des vitesses de trois à quatre fois supérieures aux vitesses normales, et la fraction complémentaire de l'énergie de crash étant absorbée par la structure de l'aérodyne supportant les amortisseurs ou amortisseurs-vérins, ces derniers ne devant être détruits qu'après avoir profité de toute leur courses en compression, quelle que soit la vitesse verticale de l'aérodyne vis-à-vis du sol, et l'effort subi par l'amortisseur restant voisin de la charge limite élastique et, en tout cas, inférieur à la charge extrême, charge de ruptude de l'atterrisseur ou de l'amortisseur.

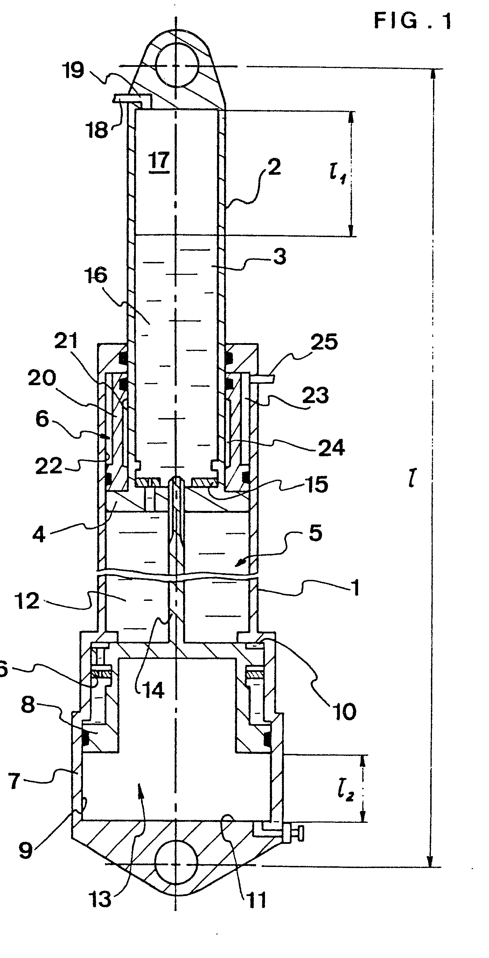

Des amortisseurs répondant aux caractéristiques décrites ci-dessus ont déjà été mis en oeuvre, notamment par la demanderesse et ils ont donné de bons résultats. Un exemple d'une mise en oeuvre est d'ailleurs donnée en regard de la fig. 1 afin d'illustrer l'art antérieur à la présente invention.

Il a été rappelé ci-dessus la technique des amortisseurs de l'art antérieur, cette technique peut être illustrée par différents documents, notamment par la demande de brevet européen numéro 0 014 660 et éventuellement même aussi par les deux demandes de brevet français 2 370 196 et 2 340 482.

Cependant ces amortisseurs demandent, pour pouvoir absorber l'énergie due à un atterrissage en catastrophe, un encombrement en longueur relativement important. Par contre quand ces mêmes amortisseurs sont associés par exemple à des atterrisseurs qui doivent pouvoir se rétracter, cet encombrement est alors incontestablement un inconvénient.

La présente invention a pour but de réaliser un amortisseur qui puisse à la fois absorber une énergie importante du fait d'une grande longueur mais qui de plus, puisse quand même se raccourcir, à la demande d'une valeur plus importante que celle de l'art antérieur.

Plus précisément, la présente invention a pour objet un amortisseurvérin comprenant:

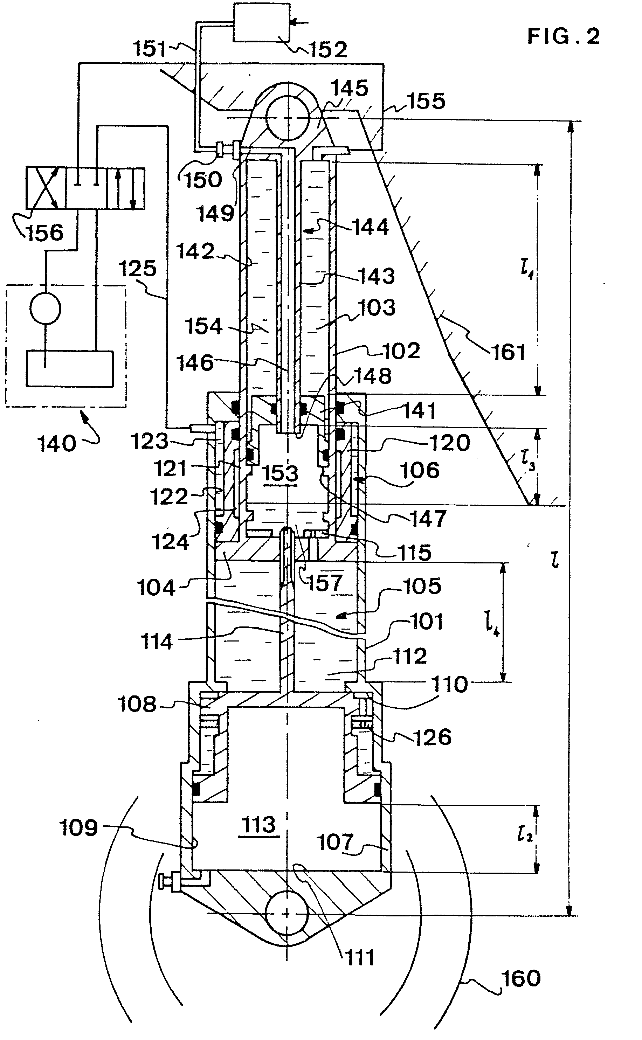

— un cylindre,
— une tige creuse définissant un premier logement coulissant par l'intermédiaire d'un piston de séparation dans ledit cylindre, pour définir dans cedit cylindre deux chambres à volume variable, une première chambre entre ledit piston et un fond dudit cylindre, et une deuxième chambre, annulaire entre le piston, le cylindre et ladite tige, des moyens pour mettre en communication la première chambre et ledit logement,

caractérisé par le fait qu'il comprend un piston séparateur apte à coulisser de façon étanche dans ledit logement, pour le diviser en deux parties dites haute et basse, la partie haute comportant du fluide incompressible et la partie basse comportant du fluide compressible, des moyens pour définir une position limite basse dudit piston séparateur dans ledit logement, et des moyens pour faire varier à volonté le volume du fluide incompressible dans ladite partie haute. D'autres caractéristiques et avantages de la présente invention apparaîtront au cours de la description suivante donnée en regard des dessins annexés à titre illustratif, mais nullement limitatif, dans lesquels la fig. 1 est donnée pour illustrer l'état de la technique antérieure et bien faire ressortir l'amortisseur selon l'invention dont un mode de réalisation est illustré sur la fig. 2.

Ainsi, la fig. 1 représente un mode de réalisation d'un amortisseur qui, selon les connaissances de la demanderesse, devrait être l'amortisseur qui illustre le mieux l'état de la technique dans le domaine de l'invention.

L'amortisseur comprend un cylindre 1 dans lequel coulisse une tige 2 réalisée en creux pour délimiter un logement 3. Cette tige coulisse dans le cylindre par l'intermédiaire d'un piston 4 de séparation permettant de définir dans le cylindre une première chambre inférieure 5, en-dessous du piston et une deuxième chambre annulaire 6 comprise entre le piston 4, le cylindre 1 et la tige 2.

Comme représenté, le cylindre 1 comporte dans sa partie basse 7 un fond mobile 8 coulissant de façon étanche contre la paroi 9, mais limité par deux butées 10 et 11. Le volume 12 compris au-dessus du fond mobile 8 est rempli de fluide incompressible comme de l'huile, et le volume 13 compris en-dessous du fond mobile par un milieu élastique, formant ressort à seuil constitué par exemple par un fluide compressible comme un gaz à haute pression.

Ce fond mobile porte une contre-tige 14 ayant la forme d'une aiguille, qui traverse le piston 4. Cette contre-tige 14 sert de moyen pour moduler la communication du fluide entre le volume 12 et le logement 3 avec, de façon connue, les moyens de laminage représentés schématiquement par des clapets en 15.

Pour compléter la description de cet amortisseur, il est précisé que le logement 3 comprend au-dessus du volume de fluide incompressible 16 un volume de fluide compressible formant ressort 17. Ce fluide compressible comme du gaz peut être introduit par une valve 18 et un conduit 19 situé dans le haut de la tige 2, étant donné que ce mode de réalisation d'amortisseur est destiné à être monté sur des aérodynes comme des hélicoptères de façon qu'il soit toujours sensiblement vertical et que la tige soit en partie supérieure.

De plus, ce genre d'amortisseur doit pouvoir comprendre des moyens commandables adaptés, permettant de réduire sa longueur quand, par exemple, l'hélicoptère doit être rangé dans des hangars de hauteur réduite comme par exemple dans les porte-avions.

Pour cela, dans la chambre annulaire 6 est disposé un piston 20 dit de vérin, pouvant coulisser contre la paroi extérieure 21 de la tige 2 et la paroi intérieure 22 du cylindre 1.

Ce piston 20 délimite dans la chambre 6 deux espaces 23 et 24, l'espace 23 pouvant être alimenté par une source de fluide extérieur par le conduit 25.

Le fonctionnement de cet amortisseur est le suivant. Comme il est connu, ce fonctionnement sera rappelé très brièvement.

Il est tout d'abord précisé que l'amortisseur est représenté dans sa position détendue. Partant de cette position:

A) quand l'amortisseur est soumis à un choc normal par exemple quand l'aérodyne roule sur la piste, dans ce cas la tige 2 s'enfonce dans le cylindre, de l'huile passe relativement facilement de la chambre 12 dans le logement 13 pour venir comprimer le volume de gaz 17 qui amortit le choc à la manière d'un moyen élastique. La tige revient à sa position d'équilibre sous la force de pression du fluide comprimé, mais, dans ce cas, avec un laminage du fluide qui repasse du logement 3 vers la chambre 12 dans les clapets 15.

B) par contre, quand l'amortisseur est soumis à un grand choc par exemple lors d'un atterrissage en catastrophe, dans ce cas, presque toute la pression de choc est transmise au fond mobile qui s'enfonce à l'encontre de la chambre haute pression en amortissant une grande partie du choc qui continue ensuite à être absorbée par la chambre basse pression.

L'amortisseur revient à sa position d'équilibre de façon lente par laminage du fluide comme précédemment dit, dans les clapets 15 au niveau du piston de séparation 4 et des clapets 26 au niveau du fond mobile 8.

C) enfin, quand la longueur de l'amortisseur doit être réduite, un fluide de commande sous pression et de préférence incompressible, est envoyé dans l'espace 23 par la conduite 25, et de la sorte, le piston de vérin 20 se déplace vers le piston de séparation 4, et tend à enfoncer la tige dans le cylindre jusqu'à ce que le volume de gaz 17 soit comprimé au maximum, ainsi la longueur de l'amortisseur est à son minimal. Comme le volume total d'huile dans la tige et le cylindre est invariable, la longueur minimale que pourrait atteindre l'amortisseur si: 1 est sa longueur totale détendue, et $l_1$ et $l_2$ la hauteur des chambres haute et basse pression, est en fait $l - l_1$ si on considère que généralement $l_2$ ne varie pas étant donné la haute pression qui règne dans la chambre 13.

Or, il peut être intéressant de réduire l'encombrement en longueur de cet amortisseur même quand il n'est pas possible de réduire sa longueur en position détendue pour des questions par exemple de point d'attache et de diamètre de roue.

Le mode de réalisation donné sur la fig. 2 permet de répondre en grande partie au problème soulevé ci-dessus.

La fig. 2 représente un amortisseur comprenant un cylindre 101 dans lequel coulisse une tige 102 réalisée en creux pour délimiter un logement 103. Cette tige 102 coulisse dans le cylindre par l'intermédiaire d'un piston 104 de séparation permettant de définir dans le cylindre 101 une première chambre inférieure 105 située en-dessous du piston et une deuxième chambre annulaire 106 comprise entre le piston 104, le cylindre 101 et la tige 102.

De plus, le cylindre 101 comporte dans sa partie basse 107 un fond mobile 108 auquel sont associés des moyens de laminage comme des clapets 126. Ce fond mobile 108 coulisse de façon étanche contre la paroi 109 entre deux butées mécaniques représentées par des portions 110 et 111 de la paroi interne du cylindre 101.

Ainsi, le volume 112 compris au-dessus du fond mobile 108 est rempli d'un fluide incompressible comme de l'huile et le volume 113 compris endessous du fond mobile est rempli d'un milieu élastique assurant une fonction de ressort à seuil constitué par exemple par un fluide compressible comme un gaz tel de l'azote, portée à haute pression.

Ce fond mobile porte une contre-tige 114 ayant la forme d'une aiguille qui traverse le piston 104. Cette contre-tige 114 sert de moyen pour moduler la communication du fluide entre le volume 112 et le logement 103. Bien entendu, le piston 104 comporte aussi des moyens de laminage comme des clapets 115.

Cet amortisseur qui est destiné plus particulièrement à des aérodynes, comme par exemple des hélicoptères, doit aussi assurer une fonction vérin, pour réduire sa longueur quand par exemple l'hélicoptère doit être rangé dans des hangars de hauteur réduite, comme par exemple sur les porteavions.

Pour cela, la chambre annulaire 106 contient un piston de vérin 120 pouvant coulisser de façon étanche d'une part, contre la paroi externe 121 de la tige 102 et, d'autre part, contre la paroi interne 122 du cylindre 101.

Ce piston 120 divise cette chambre en deux expaces 123 et 124, et l'espace 123 peut être alimenté par une source de fluide 140 par le conduit 125.

Dans ce mode particulier de réalisation, où tout ce qui vient d'être décrit se retrouve dans les modes de réalisation antérieurs. Par contre, on constate que dans le logement 103 coulisse un piston séparateur 141 d'une part, contre la paroi interne 142 de la tige 102 et contre la paroi externe 143 d'un guide central 144 fixé sur le fond supérieur 145 de la tige 102. De plus, ce guide comporte un canal central 146 qui débouche à une extrémité 148 toujours en-dessous du piston 141 dont la position limite basse est parfaitement définie par des butées mécaniques 147 et à son autre extrémité 149 en dehors de la tige 102 par une valve 150 qui peut être connectée par une canalisation 151 à une source de fluide compressible commandable 152 comme il sera expliqué ci-après.

De ce fait, le piston séparateur 141 délimite dans le logement 103 deux volumes 153 et 154, et il peut se déplacer en coulissant notamment le long du guide 144 entre la butée 147 et le fond 145 de la tige 102.

Le volume 154 peut être relié par une conduite 155 aussi à une source de fluide incompressible comme par exemple la même source 140 que celle qui alimente l'expace 123 mentionné ci-dessus. Par contre, dans ce cas, l'espace 123 et le volume 154 sont reliés respectivement à la source 140 à travers un distributeur 156 commandable. Ce distributeur permet essentiellement, soit de remplir l'espace 123 tout en permettant la vidange du volume 154, ou soit de vidanger l'espace 123 tout en permettant le remplissage du volume 154, ou soit enfin d'obturer les deux canalisations 125 et 155 pour maintenir en l'état les quantités de fluide dans l'espace 123 et le volume 154, d'une façon générale ce distributeur permet de commander la synchronisation des commandes du déplacement respectivement des deux pistons 120 et 141.

Enfin, il est précisé que le guide 144 est situé sur le même axe de déplacement de l'aiguille 114 et le canal 146 à un diamètre supérieur au diamètre extérieur de l'aiguille 114, de cette façon, quand la tige 102 s'enfonce dans le cylindre 101, l'aiguille 114 pénètre dans le canal 146 et n'empêche pas de ce fait ce déplacement ni ne le limite.

Enfin, le volume 153 comprend dans son fond, quand l'amortisseur est en position détendue, une petite quantité de fluide 157 avec au-dessus une quantité de fluide compressible élastique assurant une fonction ressort comme un gaz tel de l'azote, à une pression relativement basse par rapport à celui du volume 113.

Enfin, la tige et le cylindre sont disposés de façon qu'ils soient toujours sensiblement dans une position verticale et que la tige soit dans une position supérieure comme cela est représenté sur la figure où apparaît de façon esquissée une roue 160 liée au cylindre 101 et la structure 161 de l'aérodyne sur laquelle est fixée l'extrémité 145 de la tige 102, et dans laquelle sont situés les éléments d'alimentation fluidique comme les sources 140 et 152 et le distributeur 156.

Le fonctionnement de cet amortisseur est le suivant.

Tout d'abord, en ce qui concerne l'absorption des chocs de valeur relativement faible et fort, cet amortisseur fonctionne de la même façon que celui de l'art antérieur précédemment décrit.

Et, de ce fait, ce fonctionnement dans ces deux cas ne sera pas explicite. Par contre, quand la longueur de l'amortisseur peut être réduite, le fonctionnement est le suivant.

Par une commande du distributeur 156, simultanément l'espace 123 est alimenté en fluide sous pression, et le volume 154 est relié à l'entrée d'alimentation de la source 140. De ce fait, le piston de vérin 120 pousse sur le piston 104 et fait rentrer la tige 102 dans le cylindre 101, et le piston séparateur 141 remonte dans la tige 102 en vidant le volume de fluide 154, l'aiguille 114 pénétrant dans le canal 146. Si la pression d'alimentation du fluide est suffisante, la longueur de l'amortisseur sera réduite au maximum quand le fluide 154 sera complètement vidé et que au moins le volume de fluide compressible 153 sera comprimé au maximum.

Dans ce cas, si on reprend les mêmes hypothèses que pour l'amortisseur selon l'art antérieur, c'est-à-dire $l$ la longueur totalement dépliée, $l_1$, la hauteur de fluide compressible dans 153 et, de plus, $l_3$ la hauteur du fluide dans 154, la partie mécanique de l'amortisseur sera comprimée pour obtenir une hauteur égale à:

$$l - l_1 + l_3$$

c'est-à-dire que toute proportion gardée, il est possible de réduire l'encombrement de cet amortisseur d'une valeur supplémentaire égale à $l_3$ ce qui est fort appréciable, notamment dans les conditions rappelées précédemment pour les porte-avions par exemple, étant supposé que $l_4$ est supérieure à $l_3$ comme cela est généralement le cas.

## Revendications

1. Amortisseur-vérin comprenant:

— un cylindre (101)
— une tige creuse (102) définissant un premier logement (103) coulissant par l'intermédiaire d'un piston de séparation (104) dans ledit cylindre, pour définir dans cedit cylindre (101) deux chambres à volume variable, une première chambre (105) entre ledit piston et un fond dudit cylindre, et une deuxième chambre (106) annulaire entre le piston, le cylindre et ladite tige, des moyens pour mettre en communication la première chambre et ledit logement,

caractérisé par le fait qu'il comprend un piston séparateur (141) apte à coulisser de façon étanche dans ledit logement (103), pour le diviser en deux parties dites haute et basse, la partie haute (154) comportant du fluide incompressible et la partie basse (153) comportant du fluide compressible, des moyens (147) pour définir une position limite basse dudit piston séparateur (141) dans ledit logement (103), et des moyens (140, 156) pour faire varier à volonté le volume du fluide incompressible dans ladite partie haute.

2. Amortisseur selon la revendication 1, caractérisé par le fait que ledit logement (103) comprend un guide central (144) autour duquel est apte à coulisser ledit piston séparateur (141) de façon étanche, ledit guide central (144) comportant un conduit (146) débouchant à une extrémité (148) dans ladit première partie (153) comportant du fluide compressible et à son autre extrémité (149) à l'extérieur de ladite tige (102) cette dernière extrémité (149) comportant des moyens pour connecter ledit conduit à une source de fluide compressible.

3. Amortisseur selon la revendication 2, caractérisé par le fait que, quand lesdits moyens pour mettre en communication ladite première chambre (105) avec ledit logement (103), comportent une contre-tige (114) solidaire dudit cylindre (101) coopérant avec un orifice traversant ledit piston, le conduit (146) dudit guide (144) est apte à coulisser autour de ladite contre-tige (114) quand ladite tige (102) s'enfonce dans ledit cylindre (101).

4. Amortisseur selon la revendication 3, caractérisé par le fait que ladite contre-tige (114) est solidaire d'un fond mobile (108) coulissant dans ledit cylindre (101) à l'encontre d'un moyen élastique à seuil d'effort.

5. Amortisseur selon l'une des revendications précédentes, caractérisé par le fait qu'il comporte un piston de vérin annulaire (120) situé dans ladite deuxième chambre annulaire (106) coopérant avec les parois respectivement intérieure du cylindre (122) et extérieure de ladite tige (121) pour diviser cette dite chambre annulaire en deux portions (123, 124), des moyens pour alimenter en fluide de commande l'une des deux dites portions de façon à déplacer ledit piston de vérin (120) contre ledit piston de séparation (104) et tendre, de ce fait, à déplacer ce dernier piston pour rentrer ladite tige (102) dans ledit cylindre (101).

6. Amortisseur selon la revendication 5, caractérisé par le fait que lesdits moyens pour alimenter en fluide de commande l'une des deux dites portions (123, 124) et lesdits moyens pour faire varier à volonté le volume du fluide incompressible (103) dans la partie haute coopérent avec des moyens de synchronisation pour obtenir la vidange de ladite partie quand ledit piston de vérin (120) est commandé pour rentrer ladite tige (102) dans ledit cylindre (101).

**Patentansprüche**

1. Dämpferzylinderanordnung mit einem

— Zylinder (101)
— einer Hohlstange (102), die eine erste Ausnehmung (103) begrenzt, gleitbeweglich mittels eines Grenzkolbens (104) in dem Zylinder, zum Begrenzen, in diesem Zylinder (101) zweier Kammern mit variablem Volumen, eine erste Kammer (105) zwischen dem Kolben und einem Boden des Zylinders und eine zweite ringförmige Kammer (106) zwischen dem Kolben, dem Zylinder und der Hohlstange, sowie von Mitteln zum Herstellen der Kommunikation der ersten Kammer und der Ausnehmung,

dadurch gekennzeichnet, daß sie einen Trennkolben (141) umfaßt, ausgebildet zur abgedichteten Gleitbewegung in der Ausnehmung (103) zwecks Unterteilung in zwei als obere und untere bezeichnete Partien, wobei die obere Partie (154) inkompressibles Fluid enthält und die untere Partie (153) kompressibles Fluid enthält, ferner Mittel (147) umfaßt zum Definieren einer unteren Grenzposition des Trennkolbens (141) in der Ausnehmung (103) sowie schließlich Mittel (146, 156) umfaßt zum wahlweisen Sichändernlassen des Volumens des inkompressiblen Fluids in der oberen Partie.

2. Zylinderanordnung nach Anspruch 1, dadurch gekennzeichnet, daß die Ausnehmung (103) eine Zentralführung (144) umfaßt, um die gleitbeweglich der Trennkolben (141) abgedichtet angeordnet ist, welche Zentralführung (144) eine Leitung (146) aufweist, die mit einem Ende (148) in die erste, das kompressible Fluid enthaltende Partie (153) mündet und mit ihrem anderen Ende (149) außerhalb der Hohlstange (102), welches letztere Ende (149) Mittel aufweist zum Verbinden der Leitung mit einer Quelle kompressiblen Fluids.

3. Zylinderanordnung nach Anspruch 2, dadurch gekennzeichnet, daß, wenn die Mittel zum Inkommunikationbringen der ersten Kammer (105) mit der Ausnehmung (103) eine Gegenstange (114) umfassen, verbunden mit dem Zylinder (101) und zusammenwirkend mit einer den Kolben durchsetzenden Öffnung, die Leitung (146) der Zentralführung (144) ausgebildet ist zur Gleitbewegung um die Gegenstange (114), wenn die Stange (102) in den Zylinder (101) eintaucht.

4. Zylinderanordnung nach Anspruch 3, dadurch gekennzeichnet, daß die Gegenstange (114) mit einem beweglichen Boden (108) verbunden ist, der in dem Zylinder (101) gleitbeweglich ist, entgegen einer elastischen Einrichtung mit Kraftschwelle.

5. Zylinderanordnung nach einem der vorangehenden Ansprüche, dadurch gekennzeichnet, daß sie einen Ringdämpferkolben (120) umfaßt, angeordnet in der zweiten Ringkammer (106), zusammenwirkend mit den jeweiligen inneren Wandungen des Zylinders (122) und äußeren Wandungen der Stange (121) zum Unterteilen dieser Ringkammer in zwei Bereiche (123, 124), daß sie ferner Mittel umfaßt zum Speisen eines dieser Abschnitte mit Steuerfluid derart, daß der Dämpferkolben (120) gegen den Trennkolben (104) verlagert wird und demgemäß die Tendenz hat, den letzteren Kolben zu verlagern zum Zurückführen der Stange (102) in den Zylinder (101).

6. Zylinderanordnung nach Anspruch 5, dadurch gekennzeichnet, daß die Mittel zum Speisen mit Steuerfluid eines der Abschnitte (123, 124) und die Mittel zum wahlweisen Verändern des Volumens des inkompressiblen Fluids (103) in der oberen Partie zusammenwirken mit Synchronisationsmitteln zum Erzielen der Entleerung dieser Partie, wenn der Dämpferkolben (120) gesteuert wird zum Zurückführen der Stange (102) in den Zylinder (101).

## Claims

1. A shock-absorber-actuator including:

a cylinder (101);

a hollow rod (102) defining a first housing (103) and slidable in said cylinder by means of a separation piston (104) for defining in said cylinder (101) two chambers of variable volume, a first chamber (105) between said piston and a bottom end of said cylinder, and an annular second chamber (106) between the piston, the cylinder, and said rod; and

means for putting the first chamber into communication with said housing;

characterized by the fact that it (ie. the shock-absorber-actuator) includes a separator piston (141) suitable for sliding in sealed manner in said housing (103), for dividing it into an upper portion and a lower portion, the upper portion (154) including an incompressible fluid and the lower portion (153) including a compressible fluid, means (147) defining a lower limit position of said separator piston (141) in said housing (103), and means (140, 156) for varying at will the volume of incompressible fluid in said upper portion.

2. A shock-absorber according to claim 1, characterized by the fact that said housing (103) includes a central guide (144) over which said separator piston (141) is suitable for sliding in sealed manner, said central guide (144) including a conduit (146) having one end (148) opening out in said first portion (153) including the compressible fluid and having its other end (149) open to the outside of said rod (102), said other end (149) including means for connecting said conduit to a source of compressible fluid.

3. A shock-absorber according to claim 2, characterized by the fact that, when said means for putting said first chamber (105) into communication with said housing (103) includes a counter rod (114) fixed to said cylinder (101) and co-operating with an orifice passing through said piston, the conduit (146) of said guide (144) is suitable for sliding over said counter rod (114) when said rod (102) moves into said cylinder (101).

4. A shock-absorber according to claim 3, characterized by the fact that said counter rod (114) is fixed to a moving bottom end (108) which is slidable in said cylinder (101) against resilient means having a threshold force.

5. A shock-absorber according to any preceding claim, characterized by the fact that it includes an annular actuator piston (120) situated in said annular second chamber (106) and co-operating with the inside wall of the cylinder (122) and the outside wall of said rod (121) for dividing said annular chamber into two portions (123, 124), means for feeding control fluid into one of said two portions in such a manner as to displace said actuator piston (120) against said separation piston (104) and thereby tend to displace said separation piston to cause said rod (102) to move into said cylinder (101).

6. A shock-absorber according to claim 5, characterized by the fact that said means for feeding control fluid into one of said two portions (123, 124) and said means for varying at will the volume of incompressible fluid (103) in the upper portion co-operate with synchronizing means for emptying said portion when said actuator piston (120) is controlled to move said rod (102) into said cylinder (101).

FIG . 1

FIG . 2